Europäisches Patentamt

European Patent Office

Office européen des brevets

(11) Veröffentlichungsnummer: **0 103 846**
**A2**

(12) **EUROPÄISCHE PATENTANMELDUNG**

(21) Anmeldenummer: **83109050.1**

(22) Anmeldetag: **14.09.83**

(51) Int. Cl.³: **G 03 B 27/00**

(30) Priorität: **21.09.82 DE 3234912**
**29.04.83 DE 3315708**

(43) Veröffentlichungstag der Anmeldung:
**28.03.84 Patentblatt 84/13**

(84) Benannte Vertragsstaaten:
**FR GB NL**

(71) Anmelder: **AGFA-GEVAERT Aktiengesellschaft**
**D-5090 Leverkusen 1(DE)**

(72) Erfinder: **Massengeil, Hans-Adolf, Dipl.-Ing.**
**Geiselgasteigstrasse 46**
**D-8000 München 90(DE)**

(72) Erfinder: **Steinlehner, Friedrich-K.**
**Am Blankstadl 4**
**D-8000 München 90(DE)**

(72) Erfinder: **Büchele, Albert**
**Greinerberg 9**
**D-8000 München 70(DE)**

(72) Erfinder: **Ganz, Alfred**
**Zweigstrasse 20**
**D-8031 Gröbenzell(DE)**

(54) **Selbsttätiger Vorlagenanleger.**

(57) Zum Transport der Vorlagen über die transparente Auflageplatte (2) des Kopiergerätes ist ein lose über Stützwalzen (81, 82) geführtes, vorzugsweise von einem Silikon-Gewebeband gebildetes Förderband (80) vorgesehen, welches mit einem zwischen den Stützwalzen durchhängenden Bandstück unter Schwerkraftwirkung der Vorlage aufliegt und dadurch einen schonenden Transport der Vorlagen in der Phase bewirkt, in welcher die Vorlage gegen einen im Bereich der transparenten Auflageplatte (2) in den Weg seiner Vorderkante einschwenkbaren Anschlag (33) gezogen wird. Zum Weitertransport der Vorlagen nach der Ablichtung ist eine von innen an das durchhängende Bandstück anschwenkbare Andruckrolle (87) vorgesehen. Das Ablaufen des Förderbandes (80) von den Stützwalzen (81, 82) wird durch elastische, vorzugsweise aus einem Polyester (PET) bestehende Stützscheiben (99) verhindert, welche zur Schonung des Förderbandes (80) so geformt sind, daß sie eine mit Annäherung des Bandes an die Stützwalzen kontinuierlich ansteigende Stützwirkung auf das Förderband ausüben.

Fig.2

AGFA-GEVAERT AG LEVERKUSEN
Camera-Werk München
Patentabteilung

CW 2732.7 PB                           20.09.82
CW 2802.4 PB                           20.04.83
                                       bg-se, 1085C

Selbsttätiger Vorlagenanleger

Die Erfindung betrifft einen selbsttätigen Vorlagenanleger für fotografische Kopiergeräte, bei welchem die von einem Vorlagenstapel abgenommenen
Vorlagen mittels einer Transportwalzen und/oder Förderbänder enthaltenden
Transporteinrichtung zur transparenten Vorlagenauflageplatte des Kopiergerätes befördert, dort mit ihrer Vorderkante gegen einen in den Weg dieser Vorderkante einschwenkbaren Papieranschlag angelegt und nach dem Kopiervorgang weitertransport werden.

Ein selbsttätiger Vorlagenanleger dieser Art ist u.a. Gegenstand der
DE-AS 25 50 985.

Es ist das Ziel der vorliegenden Erfindung, eine Einrichtung dieser Art
in der Weise auszugestalten, daß die Vorlagen möglichst schonend transportiert und möglichst sicher an den Papieranschlag angelegt werden.

CW 2732.7 PB/CW 2802.4 PB

- 2 -

Gemäß der Erfindung wird die gestellte Aufgabe durch die im kennzeichnenden Teil des Anspruches 1 aufgeführten Merkmale gelöst.

Einzelheiten der Erfindung ergeben sich aus den Unteransprüchen und der Beschreibung, worin im folgenden anhand der Zeichnung mehrere Ausführungsbeispiele erörtert werden. Es zeigen

Fig. 1      einen Schnitt durch einen erfindungsgemäßen Vorlagenanleger,

Fig.2       einen Schnitt durch die Transporteinrichtung des
            Vorlagenanlegers entlang der Linie II-II in Figur 3,

Fig. 3      einen Schnitt durch die Transporteinrichtung entlang der Linie
            III-III in Figur 2, und

Fig. 4      einen Schnitt durch die Einrichtung entlang der Linie IV-IV in
            Figur 3.

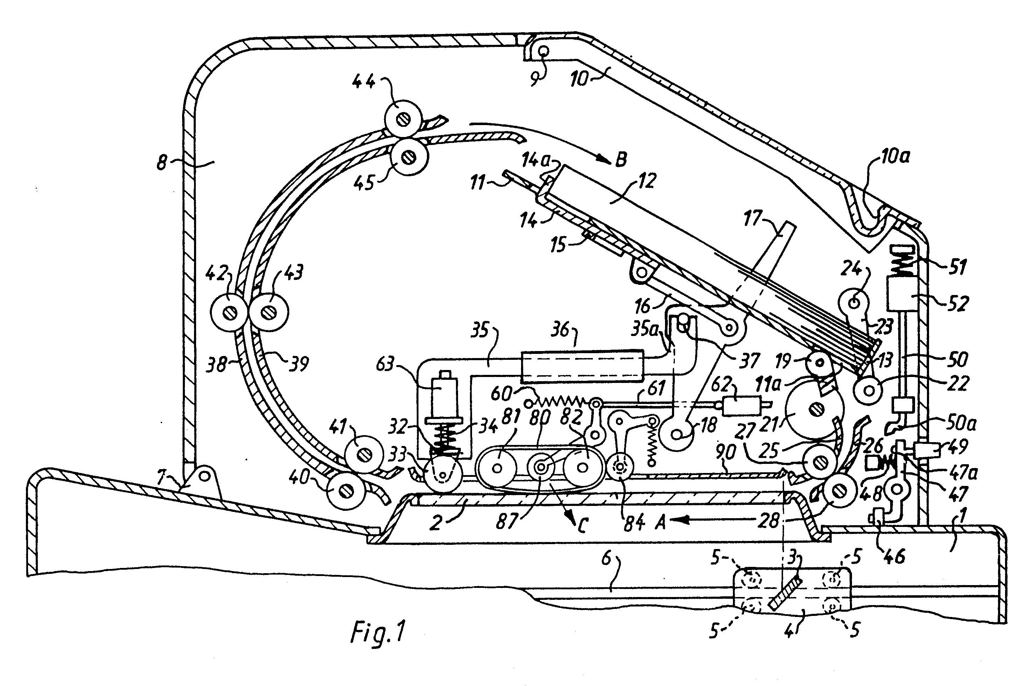

In Figur 1 ist an einem Kopiergerät 1 eine transparente Auflageplatte 2 zum Auflegen der mittels des Kopiergerätes abzulichtenden Vorlagen angeordnet. Zur streifenweisen Ablichtung der Vorlagen dient in bekannter Weise ein Abtastspiegel 3. Der Abtastspiegel 3 ist an einem Kopierschlitten 4 befestigt, welcher mittels Führungsrollen 5 an Führungsschienen 6 des Gerätes geführt ist.

Am Oberteil des Kopiergerätes 1 sind Lagerböcke 7 angeordnet, an welchen das Gehäuse 8 eines Vorlagenanlegers schwenkbar angelenkt ist. Das Gehäuse 8 ist nach unten durch ein Bodenblech 90 und nach oben durch einen schwenkbar an einer Achse 9 des Gehäuses 8 angelenkten transparenten Deckel 10 abgeschlossen, an welchem eine Griffmulde 10a zum Öffnen des Deckels ausgebildet ist.

CW 2732.7 PB/CW 2802.4 PB

Im Innern des Gehäuses 8 ist eine Auflageplatte 11 für einen Vorlagenstapel 12 angeordnet. Der Stapel 12 liegt an seiner Vorderseite einem Stapelanschlag 13 an. Die hintere Stapelbegrenzung bilden verschiebbare Stapelanschläge 14a, welche an einem Schieber 14 angeordnet sind, der in
einer an der Auflageplatte 11 befestigten Führungsplatte 15 längsverschieblich geführt ist. Die verschiebbaren Stapelanschläge 14a sind zur
Einstellung auf verschiedene Formatlängen der im Stapel 12 befindlichen
Vorlagen mittels einer Schubstange 16 mit einem Einstellhebel 17 verbunden, welcher an einer Achse 18 des Gehäuses 8 gelagert ist.

Zur Vereinzelung der im Stapel 12 befindlichen Vorlagen ist ein in bekannter Weise mit dem jeweils untersten Blatt des Stapels zusammenwirkender, schwenkbarer Saugabnehmer 19 vorgesehen, welcher in eine Ausnehmung 11a der Auflageplatte 11 eingreift. Der Saugabnehmer 19 schwenkt die
Vorderkante des von ihm erfaßten Blattes vom Stapel 12 ab und führt sie
zwischen eine auf einer festen Achse 20 gelagerte Transportwalze 21 und
eine schwenkbare Transportwalze 22. Die schwenkbare Transportwalze 22 ist
an Schwenkhebeln 23 gelagert, welche an einer Achse 24 des Gehäuses 8 angelenkt sind. Dem Transportwalzenpaar 21, 22 ist eine Papierführung 25,
26 nachgeschaltet, an welcher ein weiteres Transportwalzenpaar 27, 28 zum
Weitertransport der nach dem Anschwenken der Transportwalze 22 von dem
Transportwalzenpaar 21, 22 erfaßten Vorlagen angeordnet ist.

Die Transportwalzen 27, 28 fördern die Vorlagen in Pfeilrichtung A über
die transparente Auflageplatte 2 zu Anschlagrollen 33, welche der transparenten Auflageplatte 2 unter der Wirkung einer Druckfeder 34 anliegen.
Die Anschlagrollen 33 klemmen die Vorlagenvorderkante zwischen der Walzenoberfläche und der Oberfläche der transparenten Auflageplatte 2 ein.
Beim Einlaufen in den zwischen den beiden Oberflächen entstehenden keilförmigen Spalt ist die Vorderkante der Vorlage weitgehend gegen Beschädigungen geschützt. Auch die Oberfläche der frei drehbar oder ggf. leicht
gebremst an einem unter der Wirkung der Druckfeder 34 stehenden, an einem

CW 2732.7 PB/CW 2802.4 PB

- 4 -

Magnetanker 32a befestigten Tragarm 32 gelagerten Anschlagrollen 33 selbst kann keine einseitige Abnutzung durch die einlaufenden Vorlagenkanten erleiden, weil sie bei jedem Anschlagvorgang um ein kleines Stück weitergedreht wird, so daß ständig neue Oberflächenteile mit den Vorlagenkanten in Berührung kommen. Das Anlegen der Vorlagenkante an die Anschlagrollen 33 und der Weitertransport der Vorlagen nach dem Kopiervorgang erfolgt in der im Folgenden noch näher beschriebenen Weise mittels eines Förderbandes 80 und einer mit diesem Förderband zusammenarbeitenden Andruckwalze 87.

Zur Formateinstellung ist der längsverschiebliche Tragarm 34 der Anschlagrollen 33 an einem Schieber 35 gelagert, welcher seinerseits in einer am Gehäuse 8 befestigten Führung 36 gleitet. Eine Gabel 35a des Schiebers 35 steht mit einem auf dem Einstellhebel 17 befestigten Mitnehmerstift 37 in Eingriff. Bei Einstellung des Stapelanschlages 14a auf größere Formatlängen verstellen sich daher die mit der vorlaufenden Vorlagenkante zusammenwirkende Anschlagrollen 33 im gleichen Sinne, wodurch der Abstand der nachlaufenden Vorlagenkante zu den Transportwalzen 27, 28 sowie auch zu dem in der Figur dargestellten Anfangspunkt der optischen Abtastung unabhängig von der jeweiligen Formatlänge der Vorlage erhalten bleibt.

Nach dem Kopiervorgang werden die Anschlagrollen 33 mittels des Magneten 63 von der transparenten Auflageplatte 2 abgehoben und der Weitertransport der Vorlagen in Pfeilrichtung A in der im folgenden noch näher beschriebenen Weise durch Anschwenken der Andruckwalze 87 an das Förderband 80 in Gang gesetzt. Die Vorlage läuft in eine Wendeschleife 38, 39 ein, wo sie von ständig umlaufenden Transportwalzenpaaren 40-45 erfaßt und schließlich in Pfeilrichtung B auf die Oberseite des Stapels 12 wieder abgelegt wird. Auf ihrem Weg durch die Führungen 25, 26, 90 und die Wendeschleife 38, 39 wird die Vorlage zweimal gewendet, so daß die ursprünglich mit der beschrifteten Seite nach oben liegende Vorlage mit der

- 5 -

Schriftseite nach unten in die Kopierstation einläuft, und in der ursprünglichen Orientierung, mit der Schriftseite nach oben, wieder auf dem Stapel 12 abgelegt wird. In der zuletzt genannten Lage ist die Schriftseite der Vorlage durch den transparenten Deckel 10 hindurch sichtbar, wodurch sich der ordnungsgemäße Durchlauf der Vorlagen leicht überwachen läßt. Zum Wechseln des Stapels oder zur Behebung von Transportstörungen wird der Deckel 10 an seiner Griffleiste 10a erfaßt und aufgeklappt.

Für den Fall, daß Vorlagen von Hand auf die transparente Auflageplatte 2 des Kopiergerätes 1 aufgelegt werden sollen, kann das Gehäuse 8 des Vorlagenanlegers um seine Lagerung 7 vom Kopiergerät 1 abgeschwenkt werden, so daß die transparente Auflageplatte 2 frei liegt. Damit dieses Abschwenken nicht unabsichtlich bzw. irrtümlich erfolgen kann, ist das Gehäuse 8 mittels eines in einen Bügel 46 des Gerätegehäuses 1 eingreifenden Sperrhebels 47 verriegelt. Der unter der Wirkung einer Druckfeder 48 stehende Sperrhebel 47 läßt sich mittels eines durch das Gehäuse 8 ragenden Betätigungsknopfes 49 entriegeln.

Mit dem Sperrhebel 47 arbeitet außerdem ein Sperrschieber 50 zusammen, dessen Sperrhaken 50a von einer Feder 51 außer Eingriff mit dem Sperrhebel 47 gehalten wird. Der Sperrschieber 50 ist mit dem Anker eines Magneten 52 verbunden, welcher den Sperrhaken 50a bei eingeschaltetem Magneten 50 in den Weg eines am Sperrhebel 47 ausgebildeten Anschlages 47a zieht. Der Magnet 52 wird von der zentralen Steuerung des Kopiergerätes 1 so lange eingeschaltet gehalten, als in dem Kopiergerät 1 ein Kopiervorgang abläuft und die betreffende Vorlage noch nicht wieder auf dem Stapel 12 abgelegt ist. Durch diese Einrichtung wird verhindert, daß das Gehäuse 8 des Vorlagenanlegers während eines laufenden Kopiervorganges vom Kopiergerät abgehoben wird.

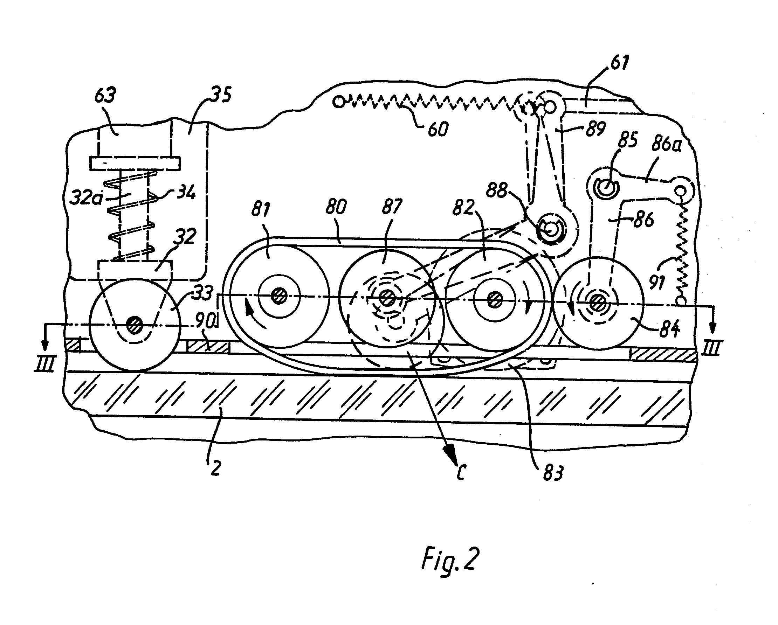

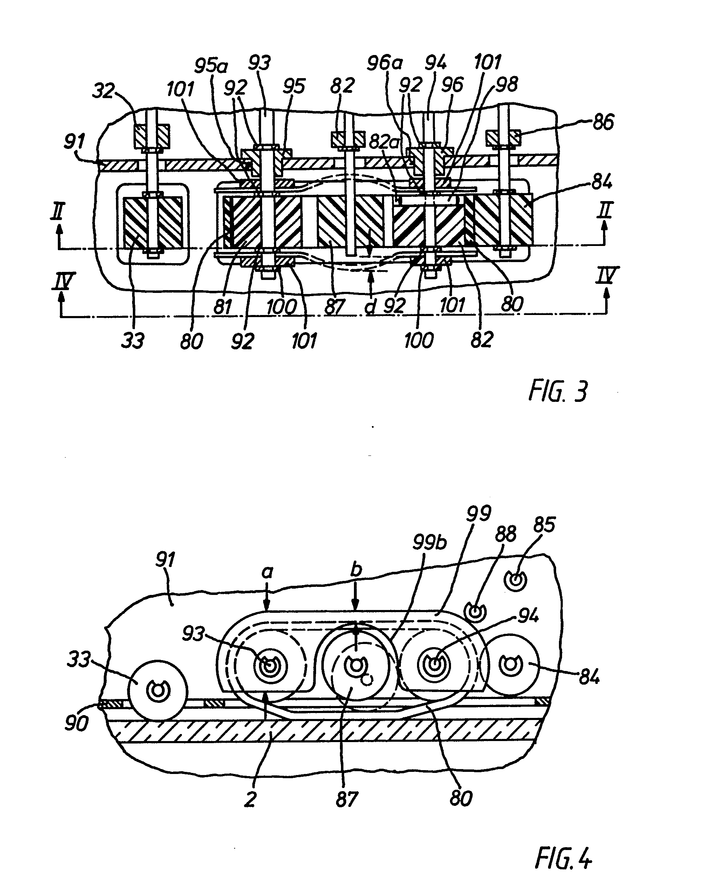

Wie insbesondere aus den Figuren 2 und 3 hervorgeht, dient zum Transport der Vorlagen über die transparente Auflageplatte 2 ein in der angezeigten Pfeilrichtung umlaufendes Förderband 80, welches über zwei Stützwalzen 81 und 82 gelegt ist. Die Stützwalzen 81 und 82 sind in Platinen 91 des Vorlagenanlegers, von denen in den Figuren 2-4 nur eine gezeigt ist, gelagert. Sie sind mittels Sprengringen 92 an den Wellen 93 und 94 befestigt, welche in Buchsen 95 und 96 gelagert sind. Die Buchsen 95 und 96 sind durch die Platine 91 gesteckt und mittels an den Buchsen angebrachter, ebener Flächenstücke 95a und 96a gegen Verdrehen gesichert. Die axiale Lage der Buchsen 95 und 96 sowie der Wellen 93 und 94 ist durch innerhalb der Platinen 91 angebrachter Sprengringe 97 festgelegt.

Das Förderband 80 ist aus einem relativ schweren Silikon-Gewebe gefertigt, welches zwar sehr flexibel, aber relativ wenig elastisch ist, sodaß es zwischen den Stützwalzen 81 und 82 durchhängt und sich bei entsprechend gewähltem Abstand dieser Stützwalzen unter dem Einfluss der Schwerkraft der über die transparente Auflageplatte 2 transportierten Vorlage anlegt.

Die Welle 94 der Stützwalze 82 wird mittels eines Antriebsmotors 83 (Fig. 2) angetrieben. Die Übertragung der Antriebskraft auf die Stützwalze 82 erfolgt über einen durch die Welle 9 gesteckten, in eine Ausnehmung 82a dieser Walze greifenden Stift 98. Der angetriebenen Stützrolle 82 liegt unter Zwischenlage des Förderbandes 80 eine Andruckwalze 84 an, welche an einem auf einer Achse 85 des Gehäuses 8 gelagerten Schwenkhebel 86 angeordnet ist. Ein Arm 86a des Schwenkhebels 86 steht unter der Wirkung einer Zugfeder 91, welche für die Anlage der Andruckwalze 84 an die angetriebene Stützwalze 82 sorgt. Die Andruckwalze 84 bewirkt, daß das Förderband 80 von der Stützwalze 82 sicher mitgenommen wird und die Antriebsbewegung dieser Walze auf die über die transparente Auflageplatte geförderte Vorlage übertragen kann.

Zwischen den Stützwalzen 81 und 82 ist eine schwenkbar gelagerte Andruckwalze 87 angeordnet, welche von einem auf einer Achse 88 des Gehäuses 8
gelagerten Schwenkhebel 89 angeordnet ist. Der Schwenkhebel 89 steht unter der Wirkung einer Zugfeder 60. Er ist außerdem mit der Zugstange 61
eines Betätigunsmagneten 62 verbunden.

Wie aus Figur 1 ersichtlich ist, sind die Transportwalzen 27,28 in Transportrichtung A der Vorlagen soweit von den Anschlagrollen 33 entfernt,
daß bei richtiger Formateinstellung die Hinterkante der Vorlage diese
Transportwalzen bereits verlassen hat, bevor ihre Vorderkante die Anschlagrollen 33 erreicht. Die Andruckwalze 87 ist dabei mittels des von
der zentralen Steuereinheit des Kopiergerätes gesteuerten Magneten 62 von
der Vorlage abgehoben, so daß die Vorlagen auf diesem Stück ihres Weges
durch Trägheitswirkung bis zu den Anschlagrollen 33 weiterbefördert, und
in sehr schonender Weise an diesen Anschlag angelegt werden. Diese in der
älteren Patentanmeldung P 32 20 235.0 vom 28.05.82 bereits beschriebene
Funktionsweise setzt voraus, daß die Vorlage auf ihrem Weg zu den Anschlagrollen 33 keinen unerwarteten Widerstand vorfindet. Solche Widerstände können z. B. im Falle einer mit Knitterfalten behafteten Vorlage
insbesondere dann auftreten, wenn die Vorlage, wie im vorliegenden Fall
mittels des Bodenbleches 90, im Bereich der transparenten Auflageplatte 2
von oben geführt oder angedrückt wird. Das unter Gewichtswirkung großflächig der Vorlage aufliegende, nach dem Abheben der Andruckwalze 87
weiterlaufende Transportband 80 sorgt auch in solchen Fällen für einen
sicheren und trotzdem für die Vorlage schonenden Weitertransport der Vorlage zu den Anschlagrollen 33. Eine Beschädigung ihrer Vorderkante durch
die Anschlagrollen 33 wird durch diese Anordnung mit Sicherheit verhindert.

Nach einer bestimmten Zeit, nach welcher das Anlegen der Vorlage unabhängig von ihrer jeweiligen Formatlänge beendet sein muß, wird durch die zentrale Steuereinheit der das Förderband 80 antreibende Motor 83 ausgeschaltet und dadurch das Förderband 80 stillgesetzt, so daß kein weiteres Gleiten der Transporteinrichtung auf der Vorlagenoberfläche mehr stattfindet.

Nach Beendigung des Kopiervorganges werden von der zentralen Steuereinheit des Kopiergerätes sowohl der Antriebsmotor 83 als auch der Magnet 62 wieder eingeschaltet. Die Andruckwalze 87 legt sich unter der Wirkung der Zugfeder 60 in Pfeilrichtung C an das Förderband 80 an und drückt diese gegen die auf der transparenten Auflageplatte 2 befindliche Vorlage. Die Vorlage wird dadurch mit großer Sicherheit in Pfeilrichtung A mitgenommen und an die weiteren Transportwalzen 40-45 übergeben , welche sie auf den Vorlagenstapel 12 zurückbefördern.

Um das Ablaufen des lose hängenden Förderbandes 80 von den Stützwalzen 81 und 82 zu verhindern, sind auf die Wellen 93 und 94 zu beiden Seiten der Stützwalzen 81 und 82 Stützscheiben 99 aufgesteckt, welche aus einem elastischen Kunststoff, beispielsweise einem Polyester (PET) wie Mylar (gesch. Warenzeichen), gefertigt sind. Die äußeren Stützscheiben sind mittels Sprengringen 100 auf ihren Wellen befestigt, während die inneren Stützscheibe zwischen den Sprengringen 92 und den Buchsen 95 und 96 festgelegt sind. In beiden Fällen sind die Stützscheiben 99 im Bereich der Wellen 93 und 94 noch mit je einer Beilagscheibe 101 hinterlegt.

Wie insbesondere aus Figur 4 ersichtlich ist, sind die Stützscheiben 99 mit einer Ausnehmung 99b versehen, welche einmal den Zweck erfüllt, eine Kollision der Stützscheiben 99 mit der anoder abgeschwenkten Andruckrolle 87 auch im Falle einer größeren Durchbiegung der Stützscheibe mit Sicherheit zu verhindern. Zum anderen verringert die Ausnehmung 99b die Längsausdehnung des Stützscheibenquerschnittes, welche in der Nähe der Achse 93, 94 ihren maximalen Wert a aufweist, auf einen minimalen Wert b, welcher nur einen Bruchteil des Maximalwertes a ausmacht. Dadurch wird die Biegesteifigkeit der Stützscheiben 99 im Raum zwischen den Stützwalzen 81 und 82 beträchtlich verringert, so daß in diesem Raum ein Ausweichen der Stützscheiben in Achsrichtung der Wellen 93 und 94 um einen Betrag d bereits aufgrund einer geringen, vom Förderband 80 auf die Stützscheiben 99 ausgeübten Kraft möglich ist. Im Gegensatz hierzu können die Stützscheiben 99 in der Nähe ihres Befestigungspunktes an den Wellen 93 und 94, wo sie ihren größten Querschnitt a aufweisen und zudem mit den Beilagscheiben 101 hinterlegt sind, auch stärkeren, vom Förderband 80 auf die Stützscheibe ausgeübten Axialkräften kaum nachgeben. Aufgrund dieser Federcharakteristik der Stützscheiben 99 wird das Förderband 80 in äußerst schonender Weise am Ablaufen von den Stützwalzen 81 und 82 gehindert. Versuche haben gezeigt, daß bei Verwendung der erfindungsgemäßen, elastischen Stützscheiben die schnelle Abnutzung der Seitenkanten des Förderbandes, welche bei Verwendung starrer Stützscheiben oder starrer Bordkanten an den Stützwalzen zu beobachten war, nicht auftrat.

AGFA-GEVAERT AG LEVERKUSEN
Camera-Werk München
Patentabteilung

CW 2732.7 PB                          20.09.82
CW 2802.4 PB                          20.04.83
                                      bg-se, 1085C

## Ansprüche

1.  Selbsttätiger Vorlagenanleger für fotografische Kopiergeräte, bei
    welchem die von einem Vorlagenstapel abgenommenen Vorlagen mittels
    einer Transportwalzen und/oder Förderbänder enthaltenden Transporteinrichtung zur transparenten Vorlagenauflageplatte des Kopiergerätes befördert, dort mit ihrer Vorderkante gegen einen in den Weg
    dieser Vorderkante einschwenkbaren Papieranschlag angelegt und nach
    dem Kopiervorgang weitertransport werden, dadurch gekennzeichnet,
    daß der Transport der Vorlagen im Bereich der transparenten Auflageplatte (2) mittels eines flexiblen, im wesentlichen unelastischen
    Förderbandes (80) erfolgt, welches lose über zwei Stützwalzen
    (81,82) gehängt ist, und welches mit einem zwischen den beiden
    Stützwalzen nach unten durchhängenden Bandstück unter Schwerkraft-
    wirkung dem zu transportierenden Aufzeichnungsträger aufliegt.

CW 2732.7 PB/CW 2802.4 PB

2.  Vorlagenanleger nach Anspruch 1, dadurch gekennzeichnet, daß ein nicht mit dem Aufzeichnungsträger in Berührung stehendes Stück des Förderbandes (80) zwischen einer angetriebenen Stützwalze (80) und einer Andruckwalze (84) hindurchläuft.

3.  Vorlagenanleger nach Anspruch 1 oder 2, dadurch gekennzeichnet, daß eine im Bereich des durchhängenden Bandstückes von innen an das Förderband (80) anschwenkbare Andruckwalze (87) vorgesehen ist.

4.  Vorlagenanleger nach Anspruch 3, dadurch gekennzeichnet, daß die Andruckwalze (87) mittels eines von der zentralen Steuereinrichtung des Kopiergerätes in Abhängigkeit von der Fertigstellung einer Kopie gesteuerten Elektromagneten (62) betätigbar ist.

5.  Vorlagenanleger nach einem der vorhergehenden Ansprüche, dadurch gekennzeichnet, daß das Förderband (80) von einem Silikon-Gewebeband gebildet wird.

6.  Vorlagenanleger, insbesondere nach einem der vorhergehenden Ansprüche, dadurch gekennzeichnet, daß an den Achsen (93, 94) der Stützwalzen (81, 82) elastische Stützscheiben (99) befestigt sind, welche den Seitenkanten des Förderbandes (80) zumindest im Bereich zwischen den Stützwalzen (81, 82) anliegen.

7.  Vorlagenanleger nach Anspruch 6, dadurch gekennzeichnet, daß die Ausdehnung (a) der Querschnittsfläche bzw. die Biegesteifigkeit der Stützscheiben (99) im Achsbereich der Stützwalzen (81, 82) ein Mehrfaches der Ausdehnung (b) der Querschnittsfläche bzw. der Biegesteifigkeit der Stützscheiben im Bereich zwischen den Stützwalzen (81, 82) beträgt.

8.  Vorlagenanleger nach Anspruch 6 oder 7, dadurch gekennzeichnet, daß die Stützscheiben (99) im Achsbereich der Stützwalzen (81, 82) mit einer Beilagscheibe (101) hinterlegt sind.

9.  Vorlagenanleger nach einem der Ansprüche 6-8, dadurch gekennzeichnet, daß die Beilagscheibe (99) aus einem elastischen Kunststoff, vorzugsweise einem Polyester (PET) beteht.

Hierzu 2 Blatt Zeichnungen

CW 2732.7 PB/CW 2802.4 PB

Fig.1

*Fig.2*

0103846

FIG. 3

FIG. 4